# EUROPEAN PATENT SPECIFICATION

(11) **EP 1 553 889 B1**
(45) Date of publication and mention of the grant of the patent: **20.08.2014**
(21) Application number: 03809182.3
(22) Date of filing: 20.10.2003
(51) Int. Cl.: A61C 5/02

(54) **ENDODONTIC INSTRUMENTS WITH PILOT TIPS AND PARABOLIC CUTTING FLUTES**
ENDODONTISCHE INSTRUMENTE MIT FÜHRENDEN SPITZEN UND PARABOLISCHEN SCHNEIDEKEHLEN
INSTRUMENTS ENDODONTIQUES POSSEDANT DES POINTES PILOTES ET DES CANNELURES PARABOLIQUES

(30) Priority: 18.10.2002 US 419662 P
(43) Date of publication of application: 20.07.2005
(73) Proprietor: Buchanan, Leonard Stephen, Santa Barbara, California 93105 (US)
(72) Inventor: Buchanan, Leonard Stephen, Santa Barbara, California 93105 (US)
(74) Representative: Vleck, Jan Montagu
(86) International application number: PCT/US2003/033360
(87) International publication number: WO 2004/034921

(56) References cited:
- US-A- 4 611 508
- US-A- 4 850 867
- US-A- 4 850 867
- US-A- 5 855 479
- US-A- 5 855 479
- US-A- 5 947 730
- US-A- 5 947 730

## Description

### BACKGROUND OF THE INVENTION

### 1. Field of the Invention

The present invention relates generally to endodontic instruments and, more particularly, to shaping files which are used to enlarge and shape the root canals prepared in human teeth so that they may be prepared for filling.

### 2. Description of the Related Art

A relatively common but difficult dental procedure is the entry into and the cleaning, shaping, and filling of root canals in human teeth that have become pathologic. In the performance of a root canal procedure, a hole is first cut in the crown or exposed portion of the tooth, typically either in the biting surface of the tooth, for posterior teeth, or in the side of the tooth on the interior of the jaw for incisor teeth.

The creation of ideal access form has been difficult with available cutting tools, specifically preparing an ideal entry path for handpiece-driven files to effortlessly enter root canals. Cutting the correct entry path is critical because without a relatively straight approach for these rotary files, they are prone to breakage due to cyclic fatigue. Another difficult aspect of endodontic therapy has been the creation of a smooth transition between each of the access line-angles and the canal orifices apical to them. Leaving an irregularity at this transition level makes every introduction of a file, paper point, or gutta percha point into the root canal a challenge. When the line angle of the access preparation drops smoothly into the canal the rest of the procedure is easier and more controlled.

Several solutions have been offered by manufacturers, such as Peezo burs which come in different configurations and access burs with no cutting flutes or diamond grit on the tip of the instrument,

Peezo burs come in different configurations, two with different degrees of parabolic flute silhouettes, and another with a pilot tip, a quarter-round flute-tip radius with parallel shank flutes. All of these burs have cutting flute lengths of around 6-8 mm. The advantages of these burs when used in access procedures are the funnel shapes they make into canals, and the pilot tip which prevents ledge formation. Unfortunately, the flute length of these burs is only half the height of most access preparations, several of the Peezo designs are able to ledge canals, and those that have pilot tips are limited in their use because these passive guides are not of the ideal dimension.

Access burs with pilot tips but without flutes or diamond grit at their ends are an improvement over those burs that can cut ledges in access and canal walls. These burs are quite limited in their use as they only cut sideways. What is needed is an access bur that has flutes the full length of the access cavity, that cuts aggressively in apical and lateral directions, that will not ledge, and will always follow the canal path. After the access preparation is completed and each of the root canals present in the tooth is located and negotiated, small endodontic instruments known generally as root canal files are then used to clean out the material present in the root canal, and to impart a specific shape to the root canal so that filling material may be inserted into the root canal to seal it. However, many problems can occur during this process.

Most common is the uncontrolled transportation of the original canal path. This occurs with traditional root canal files having aggressive tip geometry, as described by Roane patent 4,536,159, as well as with other file designs such as those by McSpadden in patents 4,299,571 and 4,332,561, and in Maillefer et al. patent 5,658,145. Files with passive radiussed tip geometries, such as those described by Buchanan in previous patents, such as 4,836,780, 5,752,825, 5,836,764, 5,842,861, 5,897,316, and 5,921,775 faithfully follow the original canal path as they cut, but these safe file tips give up a certain amount of cutting efficiency to more aggressive designs. While clinicians initially react positively to the added cutting efficiency of these files, they find in a short time that apical lacerations can easily occur if length has been mis-determined or if the files are held at length for more than one second (Manufacturer's cautions in DFU).

Furthermore, there has been some concern that the relatively narrow apical shapes created by the files described by Buchanan might not clean the ends of root canals as well as a technique which enlarged the end of root canals more. The apical stop preparation apparently accomplished this but, as Weine showed-- "The Effect of Preparation Procedures on Original Canal Shape and on Apical Foramen Shape", Journal of Endodontics, vol. 1, No. 8, August 1985, pp. 225-262--it is difficult to create these larger apical shapes in root canals without damaging the root.

McSpadden, as disclosed in his patent 4,299, 571, designed a pilot tip for root canal files which attempted to resolve this problem. Unfortunately, the pilot tips of this design were 3mm long and the cutting flutes behind them had a small. 02mm/mm taper. The function of this file concept was limited because the pilot tip often bound in the canal before the flutes contacted the canal wall, so larger shapes were impossible with these files.

US patent number US5855479 to Wong discloses a set of endodontic cutting instruments, each having handles and each having a different working tip diameter incrementally increasing in size from one instrument to the next.

US patent number US5947730 to Kaldestad discloses an endodontic instrument for preparing root canals.

US patent number US5947730 to Roane discloses an endodontic instrument including a tapered working portion defined on a flexible shaft.

US patent number US5947730 to Senia. discloses an endodontic instrument in accordance with the present invention includes a substantially non-cutting pilot segment, a relatively short cutting segment, and a flexible shaft segment, which can have a handle at its distal end for manual manipulation, or an adapter for attachment to a mechanical handpiece.

### SUMMARY OF THE INVENTION

The invention provides a flexible endodontic file and a set of flexible endodontic files as defined in the independent claims to which reference should now be made. Some preferred features of the present invention are defined in the dependent claims to which reference should also now be made.

Preferred embodiments of the present invention is to allow faster and safer cutting tools to enter and shape root canals.

This is realized primarily through a design logic incorporating sophisticated pilot tip geometry, parabolic cutting flutes in the region behind the pilot tip (referred to herein as the"alpha"or a region), and flutes of a consistent length and lesser taper comprising the region (referred to herein as the beta "or β region) between the alpha region and the shank. This design concept is applied to access preparation burs, to initial enlargement files, and to finishing files.

Files disclosed in my prior application, Ser. No. 10/630,028, are provided with two distinct degrees of taper for the two portions of each file. I contemplate as.part of the present invention additional groups of multi-taper files where the taper at the tip is one value, the taper of the flute portion adjacent the shank is another value, and there is a gradual but continuous change from one value to the other with distance from the tip. In other words, files of these groups, are not limited to two fixed tapers for corresponding sections of the flute but rather the change of taper from tip to shank portion occurs over a radius. I refer to these types of files in which the change of taper occurs over a radiussed section as parabolic files. These are incorporated in my parabolic system of endodontic implements.

Files of the type described herein are improved significantly if they are provided with a radiussed pilot tip. Parabolic shaping files with radiussed pilot tips are far safer by virtue of the radiussed tip and are virtually guaranteed to eliminate the danger of ledging in a root canal.

In one preferred arrangement of my invention, the radiussed pilot tips of different parabolic shaping files in a set are 1 mm in length and have eight different diameters, taken at the 1 mm point, for eight different parabolic shaping files. The alpha taper section behind the non-cutting pilot tip is 3 mm in length and has a 0.10 mm/mm slope for all files of this parabolic file system. The beta taper which extends to the shank is 12 mm in length and has a 0.05 mm/mm angle or slope for all files. With a 1 mm pilot tip length, an alpha length of 3 mm, and a shank length of 12 mm, all instruments have the traditional 16 mm limit to the shank-end fluted portion. These are provided in hand and handpiece-driven versions, with the hand files made in both lefthand and right-hand flute directions.

Various critical dimensions for these parabolic shaping files are set out in the following Table I. The dimensions are given in millimeters.

**TABLE I**

| (In millimeters) | | |
|---|---|---|
| D1 | D4 | D16 |
| .1 | .4 | 1.05 |
| .2 | .5 | 1.15 |
| .3 | .6 | 1.25 |
| .4 | .7 | 1.35 |
| .6 | .9 | 1.55 |
| .8 | 1.1 | 1.75 |
| 1.0 | 1.3 | 1.95 |
| 1.3 | 1.6 | 2.25 |

| | | |
|---|---|---|
| D1 is the diameter at 1 mm from the end of the file. D4 is the diameter at 4 mm from the end (3 mm from the tip). D16 is the diameter at 16 mm from the end (15 mm from the tip). | | |

For negotiating instruments, the parabolic negotiating files are simpler and fewer in number than the parabolic shaping files described above. These are provided in tip diameters of .06 mm, .08 mm, .10 mm, and .15 mm and all have 16 mm of .02 mm/mm tapered flute length. A second series incorporates variable tapers between files and some different tip diameters; specifically a 075-.02, a 10-.03, a 15-.04, and a 20-.05. Both series have the unique radiussed pilot tips and can be provided as either hand or rotary files.

The pilot tips on this family of instruments are distinguished by their fully-radiussed geometry which absolutely prevents the ledging of canals and their use-specific designs which allow unique functionality. While all' of the instruments in this set of tools have pilot tips, alpha parabolas, and beta tapers, each of the three sets of instruments has a different function and therefore requires a different concept and sizing of pilot tips. In the access burs, the pilot tips vary by increments relating to coronal canal diameters in small, medium, and large roots; 0.2, 0.3, and 0.4 mm. These pilot tips become proportionally longer as the diameter increases between sizes. This helps prevent dangerous over-extension into curved canals.

In the initial enlargement files, the pilot tips are all .2 mm in diameter by 1 mm in length because they are designed to track the guidepath cut by the #15 negotiating file taken to length as prerequisite to rotary shaping. Because of the tracking function of these pilot tips, aggressive cutting flutes and relatively high speeds can be used in these files without forsaking safety.

In the finishing files, the pilot tips are again different as they are designed to self-gauge terminal canal diameters to tell dentists when the final shaping objective has been achieved. The shape is finished when the pilot tip of the finishing file matches the terminal diameter of the canal being shaped. The dentist finds out that the shape is finished when the next larger finishing file in the series refuses to move to full length in the canal because its larger pilot tip binds the terminus of the canal.

The parabolic flute shapes come immediately off of the cylindrical shank-end of the pilot tip and end a set distance back (typically 3-5 mm) between files in each of the series. The parabolic shape could be roughly described as a .10 taper with a radiussed bulge between points such that the shank end of the alpha region is tangential to the immediately adjacent beta profile. This is the parabolic alpha region of cutting flutes, and is expressly designed to cut shapes that funnel files and filling materials into and through the canal, ultimately to its terminus.

Behind this parabolic alpha zone is the beta region. This includes a flute pattern of consistent length and taper between files in each common series. In the preferred embodiment these flute portions have a .05 taper on the access burs and finishing files to impart a subtle taper to access line angles and coronal canal shapes. The initial enlargement files are different as their beta regions are parallel in shape and the flutes are dulled. This allows just their sharp alpha regions to cut safely around curvatures while the non-cutting beta region passively follows and augers out cut debris.

In the preferred embodiment, the access burs are made in rigid stainless steel or carbon steel. There is an alternate design which has diamond grit plated onto their alpha and beta regions. In the preferred embodiment, the initial enlargement files and the finishing files are made of nickel titanium alloy. All of these instruments, of whatever material, may be treated with hardening agents such as, but not limited to, titanium nitrite.

The access burs are intended to cut apically with their parabolic tip flutes when they are pushed into a canal orifice, as their pilot tips track the canal. The side-cutting flute design comes to play then as the bur is tipped up to the access line angle, cutting a straight-line entry path for all instruments and materials to follow. These burs are used at speeds of 5,000-20,000 RPM.

The initial enlargement files are preferably made of nickel titanium alloy and are used at 1200-1500 RPM to quickly cut a coronal shape in root canals. Each of the three files in this series has the same pilot tips with .2 mm diameters so they track the previously negotiated canal with their sharp parabolic tip flutes and they all have tapered non-cutting beta flutes to prevent the instruments from cutting into the inside of coronal canal curvatures.

The finishing series of parabolic files are also made of nickel titanium alloy but are used at slower speeds, approximately 300 RPM, as they are taken to the end of the canal being prepared. These instruments have pilot tips of varying sizes, sharp parabolic alpha flutes and sharp beta flutes with a .05 mm/mm taper, just enough canal shape to allow ease of entry and narrow enough to be safe in the smallest, most curved roots. These finishing files cut the larger apical preparations desired by many clinicians, an apical stop preparation albeit with a safe apical radius rather than the problematic ledgeform of traditional stop preparations.

The series of finishing files ratchet up in tip diameter in different intervals, small increments in between the smaller sizes of files used in challenging narrow canals and bigger jumps in tip diameter in the larger sizes of files, thus addressing a very wide range of apical canal diameters in as few as eight sizes total.

### BRIEF DESCRIPTION OF THE DRAWINGS

A better understanding of the present invention may be realized from a consideration of the following detailed description, taken in conjunction with the accompanying drawings.

The instruments depicted in Figures 5A, 5B and 14 are not part of the present invention. The instruments depicted in Figures 1 to 4 and 6 to 13 are embodiments of the present invention.

In the Figures:
FIG. 1 shows a plurality of three parabolic files divided into alpha and beta sections;
FIG. 2 is a view of one particular file in accordance with the invention and shows a pilot tip at the end of the alpha portion;
FIG. 3 is an enlarged view of the alpha portion and pilot tip of a file like FIG. 2 showing a modification thereof;
FIG. 4 shows files like those of FIG. 1 but with pilot tips provided in shapes corresponding to the parabolic outlines that extend outwardly, away from the terminus of the tips;
FIG. 5A is a view of three different burs in sizes small, medium and large with alpha and beta portions and pilot tips extending from the alpha portion;
FIG. 5B is a schematic view showing a cross-section of a bur of FIG. 5A;
FIG. 6A is a view like that of FIG. 1, but with pilot tips extending from the depicted alpha portions;
FIG. 6B shows a set of eight files with dimensions corresponding to what is set out in Table I above;
FIGS. 7A-7D are schematic views of a first group of parabolic files in accordance with the present invention wherein the pilot tips have been omitted;
FIGS. 8A-8D are schematic views of another group of multi-taper files wherein the pilot tips have been omitted;
FIGS. 9A-9D are schematic views of still another group of multi-taper files wherein the pilot tips have been omitted;
FIGS. 10A-10D are schematic views of yet another group of multi-taper files wherein the pilot tips have been omitted;
FIG. 11 is an enlarged view, represented schematically, of one particular file of my parabolic file system which would also have a gradual and continuous change from the α region to the β region;
FIG. 12 is a diagrammatic representation of a tip portion of the file of FIG. 11;
FIG. 13 shows two schematic views of a file in a curved root canal with the file bending to follow the contour of the canal; and
FIG. 14 depicts schematically three burs.

### DESCRIPTION OF THE PREFERRED EMBODIMENTS

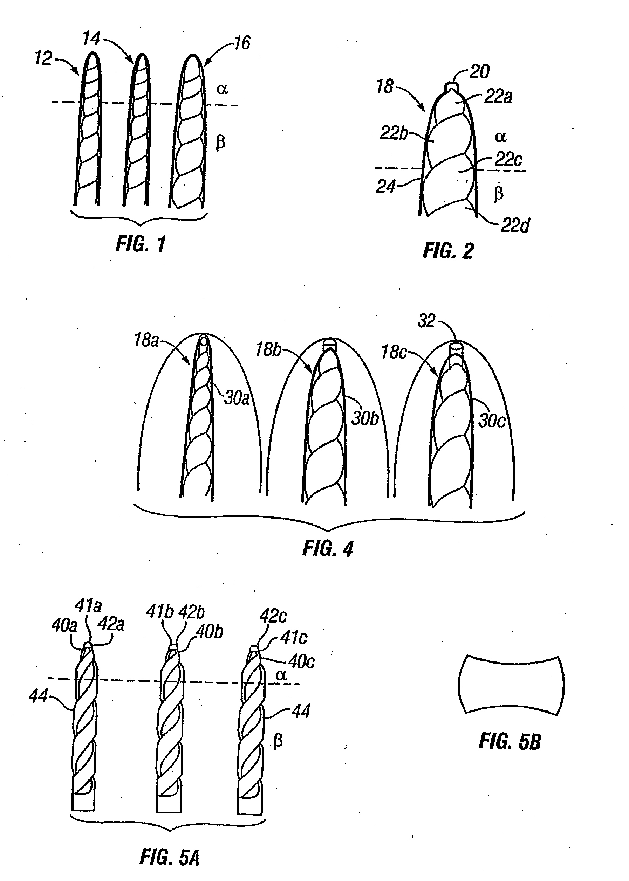

FIG. 1 shows three tapered dental files 12, 14 and 16, in different sizes and each being divided into α and β sections. These represent multi-taper files of my prior Application Ser. No. PCT/US02/03516. The files disclosed in that application include two distinct taper angles in the α and β sections with a definite change in angle occurring at the α-β juncture point.

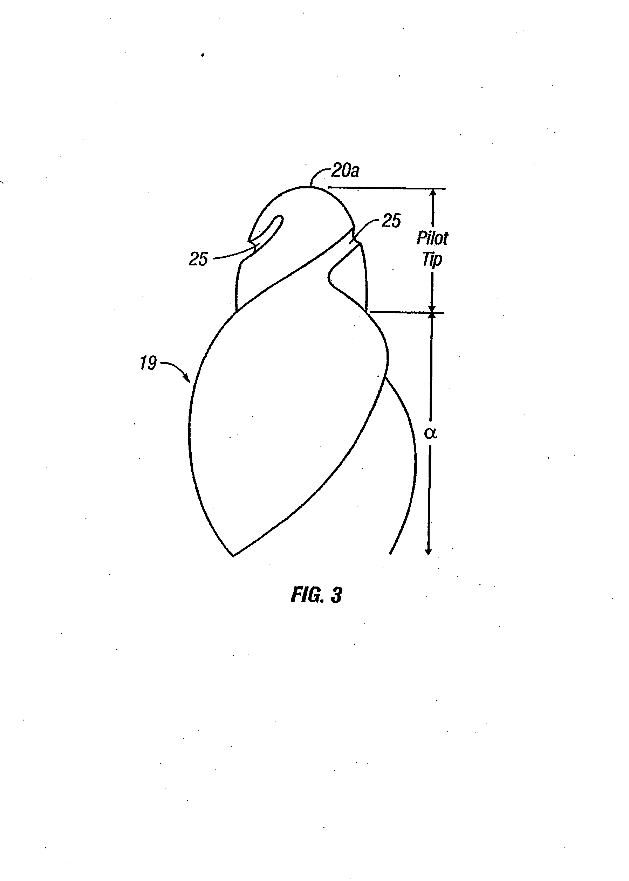

FIGs. 2 and 3 schematically represent different embodiments of the present invention. FIG. 2 depicts one particular file 18 having a pilot tip 20 and cutting flutes 22a-22d. The changes of taper angle from one cutting flute to the next are continuous in the form of a parabolic curve, indicated by the outline 24. The α and β portions of the file have different taper angles, and the change of taper from the α portion to the β portion is continuous over a radiussed curve shape.

FIG. 3 shows an enlargement of the pilot tip and α portions of a file 19, similar to that of FIG. 2. The pilot tip 20a is fully radiussed through 180 degrees, presenting a smooth surface at the forward end of the file which develops a guide path for the file and permits entry of the file into the root canal while avoiding ledging in the canal. The pilot tip 20a of the file 19 is provided with a spiral flute space 25 which serves to capture debris near the cutting edge of the file and remove it from the cutting tip. This spiral flute 25 has a non-cutting geometry.

FIG. 4 depicts three parabolic curved files such as 18a, 18b and 18c. These are shown in position within corresponding root canals, indicated by the curved lines 30. These views represent a small diameter file 18a creating a pilot opening in the root canal.

FIG. 4 illustrates finishing files 18a, 18b and 18c of different sizes inserted into root canals 30a-30c. A smaller size file 18a makes the initial cut into the root canal. File 18b is of a larger size chosen to finish the root canal to its apical depth. File 18c is shown following the guide path cut by the file 18b but, because it is somewhat larger in diameter, it binds in the canal before reaching the terminal shape 32 which was cut by the pilot tip of the file 18b.

FIG. 5A depicts a set of three access burs of different sizes, each having an α portion and a β portion, and designated small, medium and large. These access burs range from 40a in a small size through 40b, medium, and 40c, large. The access burs 40 are shaped to cut apically with the parabolic tip flutes 42a, 42b and 42c when inserted into a canal orifice, as the pilot tips 41a, 41b and 41c track the root canal. Side-cutting flutes 44 are of a fixed taper angle in order to cut a straight-line entry path for all instruments and materials to follow.

FIG. 5B is an enlarged cross-sectional view of the access burs as shown in FIG. 5A.

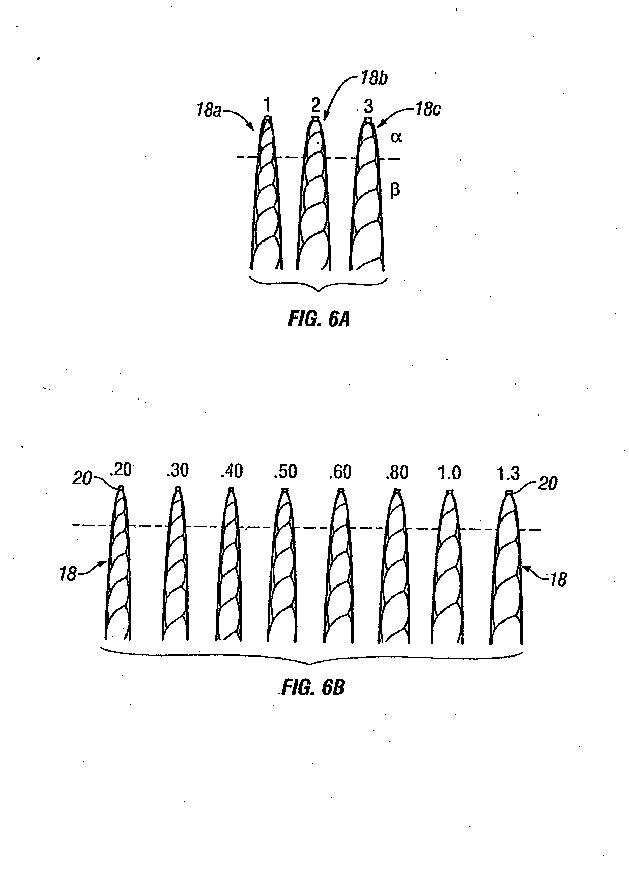

FIG. 6A shows the α and β portions of the parabolic files 18a, 18b and 18c of FIG. 4.

FIG. 6B shows a series of eight finishing files 18, all of different sizes and being parabolic in shape. In these files, the pilot tips 20 are of various sizes, corresponding to the size of the file 18. The size of these files of FIG. 6B range from .20 to 1.30 mm in diameter.

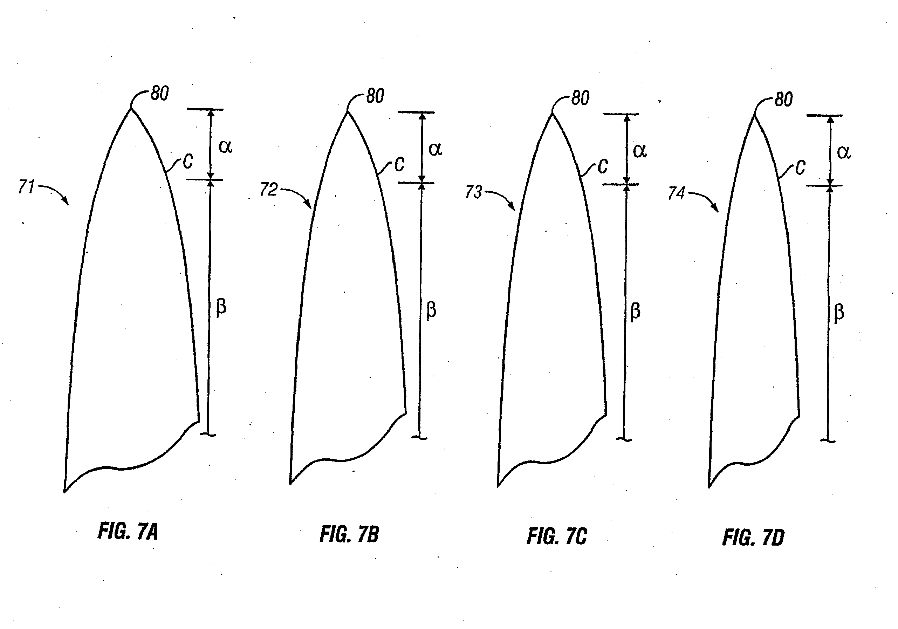

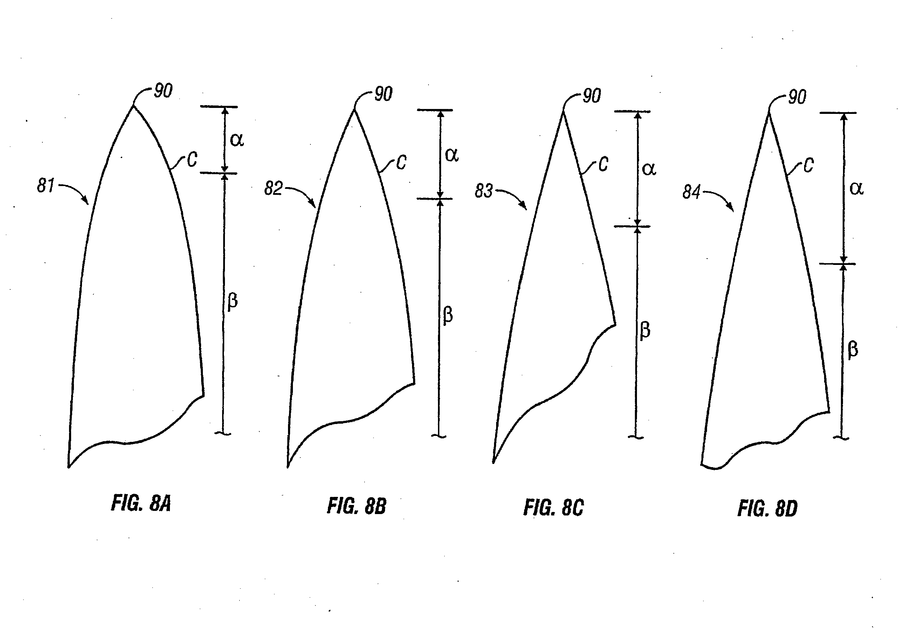

FIGS. 7A-7D schematically represent sets of four multi-tapered files 71, 72, 73 and 74 in accordance with the present invention. Each of the files is shown with a first portion α adjacent the tip 80 and a second portion β remote from the tip, extending back to the shank, not shown. The portions α and β have different tapers in the same file and the taper in the first portion also varies from file to file. In file 71 the taper of the first portion is 0.12. In file 72, the taper of the first portion is 0.10. In file 73, the taper of the first portion is 0.08. In file 74, the taper of the first portion is 0.06. In a first set of files represented by FIGS. 7A-7D, the taper of the second portion β is 0.02 mm/mm. In a second set of files, also represented by the drawings of FIGS. 7A-7D, the taper of the second portion β is 0.04 mm/mm. The files of FIGS. 7A-7D are discussed hereinabove. These and the remaining files of FIGS. 8-10 are provided with a radiussed surface in which the change of taper occurs gradually with distance from the tip from the taper of the first portion to the taper of the second portion. This is shown by the curve in the region C of FIGS. 7-10.

FIGS. 8A-8D schematically represent still another pair of sets of files in accordance with the invention. FIGS. 8A-8D show files 81, 82, 83 and 84 in a multi-tapered configuration. In each of the files 81-84, there is a first portion α adjacent the tip 90 and a second portion β remote from the tip, extending to the shank. In these sets of files, each of the first portions is a different length from those of the other first portions, being shortest for the file 81 which has the greatest taper of the first portion α (0.12) and increasing successively for files 82, 83 and 84 as the taper of the first portion diminishes, beginning at 0.10 for file 82 and ending with 0.06 for file 84.

As with the sets of files of FIGs. 7A-7D, one set of files 81-84 has a taper of 0.02 mm/mm for the second portion β whereas another set has a taper of 0.04 mm/mm for the second portion β.

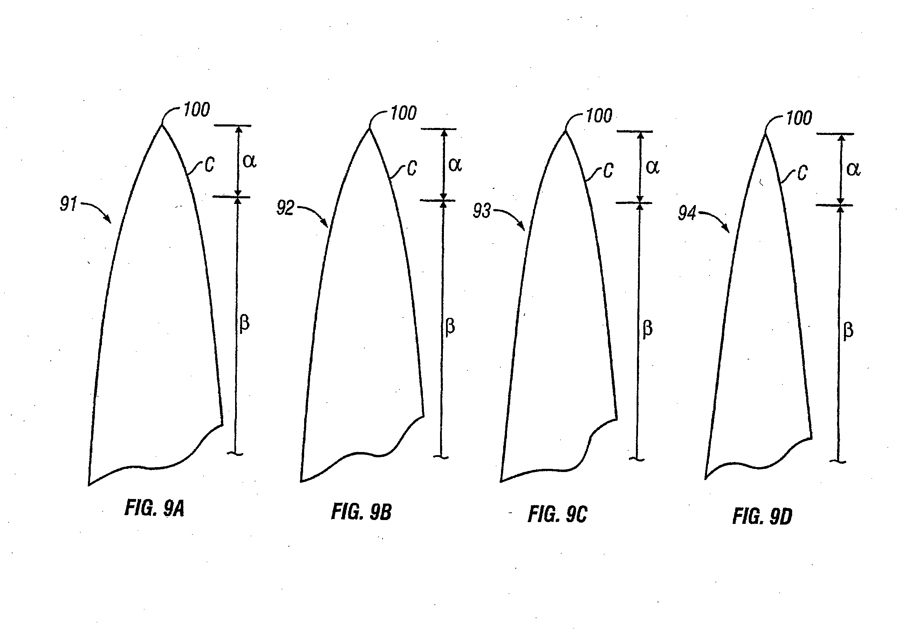

FIGS. 9A-9D schematically represent another set of four multi-tapered files 91, 92, 93 and 94 in accordance with the present invention. Each of the files is shown with a first portion α adjacent the tip 100 and a second portion β remote from the tip, extending back to the shank, not shown. The portions α and β have different tapers in the same file and the taper in the first portion also varies from file to file. In file 91 the taper of the first portion is 0.12. In file 92, the taper of the first portion is 0.10. In file 93, the taper of the first portion is 0.08. In file 94, the taper of the first portion is 0.06.

In these files 91-94, the taper of the second portion varies from file to file, increasing in taper as the taper of the first portion reduces. For the file 91, the taper of the second portion is 0.01 mm/mm; for the file 92, it is 0.02; for the file 93 it is 0.03; and for the file 94 the taper of the second portion is 0.04 mm/mm.

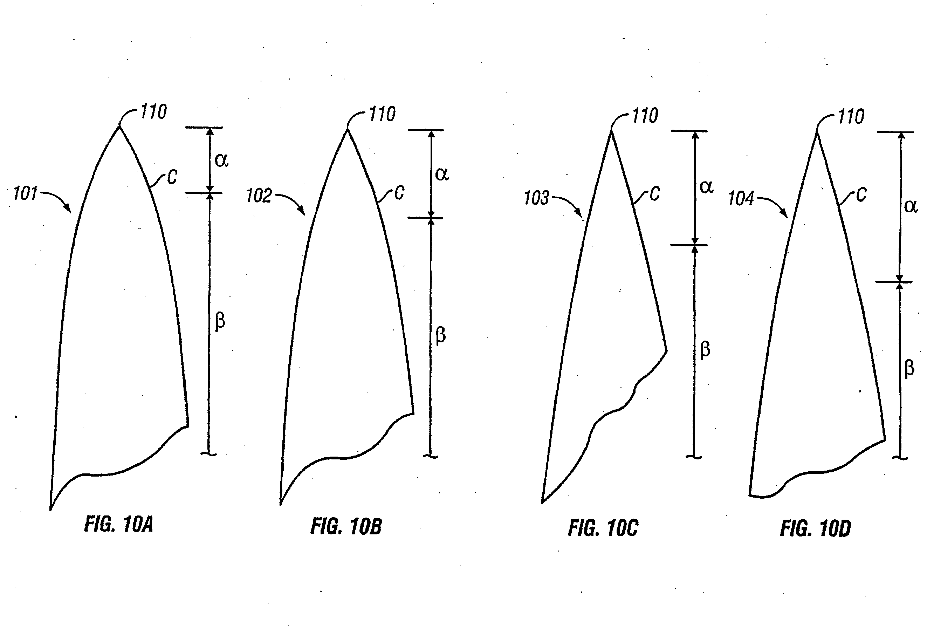

FIGS. 10A-10D schematically represent still another set of files in accordance with the invention. FIGS. 10A-10D show files 101, 102, 103 and 104 in a multi-tapered configuration. In each of the files 101-104, there is a first portion a adjacent the tip 100 and a second portion β remote from the tip, extending to the shank. In this set of files, each of the first portions is a different length from those of the other first portions, being shortest for the file 101 which has the greatest taper of the first portion a (0.12) and increasing successively for files 102, 103 and 104 as the taper of the first portion diminishes, beginning at 0.12 for file 102 and ending with 0.06 for file 104.

In these files 101-104, the taper of the second portion varies from file to file, increasing in taper as the taper of the first portion reduces. For the file 101, the taper of the second portion is 0.01 mm/mm; for the file 102, it is 0.02; for the file 103 it is 0.03; and for the file 104 the taper of the second portion is 0.04 mm/mm.

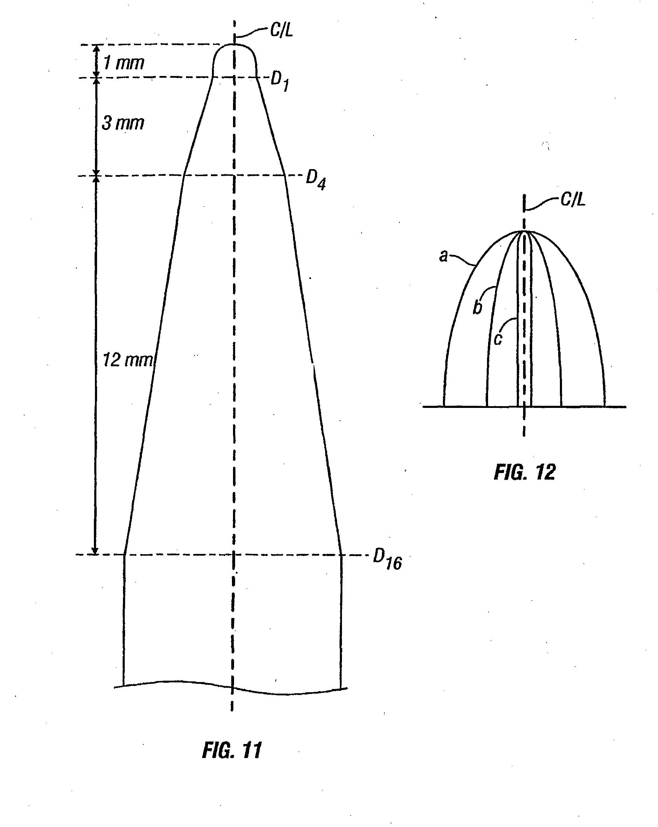

The file depicted in enlarged form in FIG. 11 has diameters D1, D4, and D16, as well as the indicated length dimensions, corresponding to what is set forth in Table I. The file of Fig 11 would of course also have the gradual and continuous transition between the two different degrees of taper in the first portion α and the second portion β. FIG. 12 represents various parabolic curves a, b, and c for the pilot tips of different files embodying the invention.

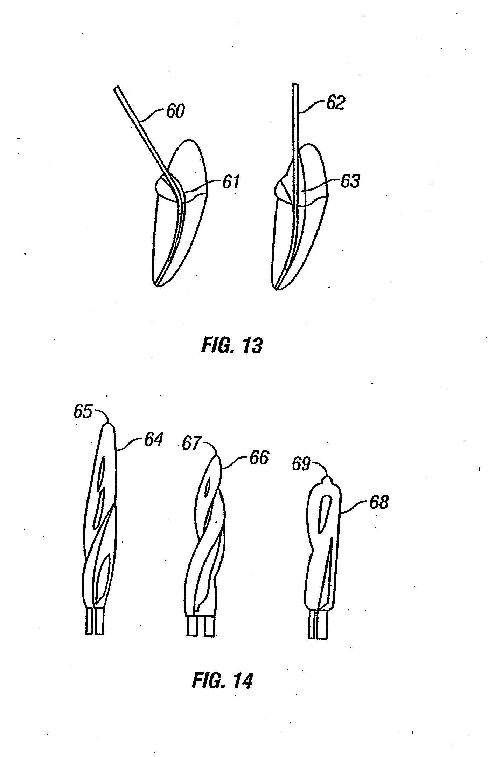

FIG. 13 shows a pair of files 60 and 62 inserted in root canals of different shapes in two different teeth. File 60 is shown inserted into a root canal 61. File 62 is inserted into a root canal 63. The root canal 61 is more curved than the root canal 63 with the related file 60 assuming a corresponding shape in root canal 61 whereas the file 62 is relatively straight and the root canal 63 is more open at its proximal end than is the root canal 61.

FIG. 14 depicts a set of access burs 64, 66 and 68 of different shapes and sizes. However, each is provided with a pilot tip: 65 for bur 64; 67 for bur 66: and 69 for bur 68. Access burs 64 and 66 each have a parabolic shape extending rearward from the pilot tip.

## Claims

1. A flexible endodontio file (12, 14, 18, 18, 19) comprising:
a round shank having a first diameter;
a tip at the end of the file remote from the shank, said tip having a second diameter which is smaller than said first diameter; and
a tapered flute portion extending between said tip and said shank and having at least one spiral cutting portion along the length thereof:
wherein said tapered flute portion has a first and a second different degree of taper in respective first α and second β different parts of said flute portion;
charecterised in that:
the change of taper between said first and second different degrees of taper is gradual and continuous from the first α to the second β part of said flute portion: and in that
a pilot tip (20) extends from the tip to provide a smooth surface at the forward end of the file for guiding the file along the root canal (30) of the tooth and avoid ledging as the file approaches an apical end of the root canal.

2. A flexible endodontic file (12, 14, 16, 18, 19) according to claim 1, wherein the diameter of the pilot tip (20) is smaller than an adjacent α part of the flute portion of the file so as to limit penetration of the α part of the flute portion of the file into the root canal (30).

3. A flexible endodontic file (12, 14, 16, 18, 19) according to claim 1 or 2, wherein the first α part of the flute portion is curved from the point of intersection with the pilot tip (20) towards the second β part of the flute portion so as to provide a continuously curved portion (24) proximally of the pilot tip (20).

4. A flexible endodontic file (12, 14, 16, 18, 19) according to any of claims 1 to 3, wherein the pilot tip (20) includes a cylindrical portion having a uniform diameter along its length.

5. A flexible endodontic file (12, 14, 16, 18, 19) according to any of the preceding claims, wherein the end of the pilot tip (20) remote from the shank of the file is hemispherical.

6. A flexible endodontic file (12, 14, 16, 18, 19) according to any of the preceding claims, wherein the first part α of said flute portion, adjacent the tip, is provided with a first fixed degree of taper and a second part β of said flute portion, adjacent the shank, is provided with a second fixed degree of taper which is less than the degrees of taper of the first part.

7. A flexible endodontic file (12, 14, 16, 18, 19) according to claim 6, wherein the taper of the first α and second parts β of the flute portion are in a selected ratio with respect to each other.

8. A flexible endodontic file (12, 14, 16, 18, 19) according to claim 7, wherein said ratio is within a range of three to six.

9. A flexible endodontic file (12, 14, 16, 18, 19) according to any of the preceding claims wherein the degree of taper at the tip of said file changes to the taper angle adjacent the shank following a parabolic curve.

10. A flexible endodontic file (12, 14, 16, 18, 19) according to any of the preceding claims wherein the taper profile of the α section varies along a parabolic curve.

11. A flexible endodontic file (12, 14, 16, 18, 19) according to any of claims 1 to 10, wherein said pilot tip (20) has a length from 0.25mm to 1.0mm and a diameter from 0.01mm to 1.1mm, such that a pilot tip (20) of 0.01 mm diameter has a length of 0.25mm, a pilot tip (20) of 1.0mm length has a diameter of 1.1mm and a pilot tip (20) of a length between 0,25mm to 1.0mm has a diameter of between 0.01mm and 1.1mm.

12. A flexible endodontic file (12, 14, 16, 18, 19) according to any of the preceding claims, wherein the pilot tip (20) is formed with a non-cutting flute space (25) to facilitate material removal.

13. A flexible endodontic file (12, 14, 16, 18, 19) according to any of the preceding claims. having a handle affixed to the shank for facilitating the manipulation of the file.

14. A flexible endodontic file (12, 14, 16, 18, 19) according to any of the preceding claims, wherein the shank is provided with a latch-grip portion for coupling to a dental handpiece.

15. A set of flexible endodontic files (12, 14, 16, 18, 19), each file corresponding to an endodontic file of any of the preceding claims, wherein the taper of the first part α of the flute portion varies from file to file in said set.

16. A set of flexible endodontic files (12, 14, 16, 18, 19), according to claim 15, wherein the range of variation from file to file of taper of the first part α of the flute portion is from 0.06 mm/mm to 0.12mm/mm.

17. A set of flexible endodontic files (12, 14, 16, 18, 19) according to claim 15 or 16, wherein a length of the first part α of the flute portion varies inversely with the taper in the first part α of the flute portion from file to file in said set

18. A set of flexible endodontic files (12, 14, 16, 18, 19) according to any of claims 15 to 17, wherein the taper of the second part β of the flute portion varies from file to file inversely to the variation of degree of taper in the first part α of the flute portions of the files in said set.

19. A set of flexible endodontic files (12, 14, 16, 18, 19) according to claim 18, wherein the taper of the second part of said flute portion increases from 0.01 to 0.04 mm/mm as the taper of the first part of said flute portion diminishes from 0.12 to 0.06 mm/mm.

20. A set of flexible endodontic files (12, 14, 16, 18, 19) according to claim 18 or 19, wherein the proportion of the length of the tapered flute portion composed of the first α portion varies inversely with the variation of the taper of the first part α of the flute portion from file to file in said set.

21. A set of flexible endodontic files (12, 14, 16, 18, 19) comprising up to 8 files according to any of claims 15 to 20, wherein:
the pilot tip (20) of each file in the set is 1 mm in length;
the diameter of a cylindrical portion of the pilot tip (20) located 1 mm from the tip (D1) is progressively larger in each file in the set, ranging in diameter from 0.1 to 1.3 mm and is 0.3 mm less than the diameter of the cylindrical portion at 4 mm from the tip (D4);
each file in the set has a tapered alpha portion proximal of the pilot tip extending for 3 mm from the diameter D1 location having a 0.10 mm/mm slope;
the pilot tip (20) is fully radiussed between the tip thereof and the alpha portion;
each file In the set has a tapered beta portion extending from the alpha portion to a shank of the file, the beta portion having a length of 12 mm and a 0.05 mm/mm slope such that the shank has a diameter of D16 of from 1.05 mm to 2.25 mm; and
each file in the set has a shank length of 12 mm.

22. A set of flexible endodontic files (12, 14, 16, 18, 19) according to any of claims 15 to 21. wherein the pilot tip (20) varies in length from one file to another, the pilot tip (20) length being shorter than 1 mm for a file having a pilot tip (20) with a relatively shorter pilot tip (20) diameter and is longer than 1 mm for a file with a relatively larger pilot tip diameter.

## Patentansprüche

1. Flexible endodontische Feile (12, 14, 16, 18, 19), umfassend:
einen runden Schaft, der einen ersten Durchmesser hat;
eine Spitze an dem vom Schaft fernen Ende der Feile, wobei die genannte Spitze einen zweiten Durchmesser hat, der kleiner als der genannte erste Durchmesser ist, und
einen sich verjüngenden Kehlenteil, der zwischen der genannten Spitze und dem genannten Schaft verläuft und längs an ihm entlang wenigstens einen spiraligen Schneidteil hat,
wobei der genannte sich verjüngende Kehlenteil einen ersten und einen anderen zweiten Verjüngungsgrad in Bezug auf einen ersten α und einen zweiten β anderen Teil des genannten Kehlenteils hat,
**dadurch gekennzeichnet, dass**:
der Übergang der Verjüngung zwischen dem genannten ersten und dem genannten zweiten anderen Verjüngungsgrad vom ersten α zum zweiten β Teil des genannten Kehlenteils allmählich und kontinuierlich ist und dass
sich eine Pilotspitze (20) von der Spitze erstreckt, um am vorderen Ende der Feile eine glatte Oberfläche zum Führen der Feile im Wurzelkanal (30) des Zahns entlang und zur Vermeidung von Stufenbildung, wenn sich die Feile einem apikalen Ende des Wurzelkanals nähert, bereitzustellen.

2. Flexible endodontische Feile (12, 14, 16, 18, 19) nach Anspruch 1, wobei der Durchmesser der Pilotspitze (20) kleiner als ein angrenzender α-Teil des Kehlenteils der Feile ist, um die Penetration des α-Teils des Kehlenteils der Feile in den Wurzelkanal (30) zu begrenzen.

3. Flexible endodontische Feile (12, 14, 16, 18, 19) nach Anspruch 1 oder 2, wobei der erste α-Teil des Kehlenteils von dem Schnittpunkt mit der Pilotspitze (20) in Richtung auf den zweiten β-Teil des Kehlenteils gekrümmt ist, um einen kontinuierlich gekrümmten Teil (24) proximal der Pilotspitze (20) bereitzustellen.

4. Flexible endodontische Feile (12, 14, 16, 18, 19) nach einem der Ansprüche 1 bis 3, wobei die Pilotspitze (20) einen zylindrischen Teil beinhaltet, der entlang seiner Länge einen gleichmäßigen Durchmesser hat.

5. Flexible endodontische Feile (12, 14, 16, 18, 19) nach einem der vorhergehenden Ansprüche, wobei das vom Schaft der Feile ferne Ende der Pilotspitze (20) halbkugelförmig ist.

6. Flexible endodontische Feile (12, 14, 16, 18, 19) nach einem der vorhergehenden Ansprüche, wobei der an die Spitze angrenzende erste Teil α des genannten Kehlenteils mit einem ersten festen Verjüngungsgrad versehen ist, und ein an den Schaft angrenzender zweiter Teil β des genannten Kehlenteils mit einem zweiten festen Verjüngungsgrad versehen ist, der kleiner als der Verjüngungsgrad des ersten Teils ist.

7. Flexible endodontische Feile (12, 14, 16, 18, 19) nach Anspruch 6, wobei die Verjüngung des ersten α und des zweiten Teils β des Kehlenteils in einem ausgewählten Verhältnis zueinander sind.

8. Flexible endodontische Feile (12, 14, 16, 18, 19) nach Anspruch 7, wobei das genannte Verhältnis innerhalb eines Bereichs von drei bis sechs liegt.

9. Flexible endodontische Feile (12, 14, 16, 18, 19) nach einem der vorhergehenden Ansprüche, wobei der Verjüngungsgrad an der Spitze der genannten Feile einer parabelförmigen Kurve folgend in den an den Schaft angrenzenden Verjüngungswinkel übergeht.

10. Flexible endodontische Feile (12, 14, 16, 18, 19) nach einem der vorhergehenden Ansprüche, wobei das Verjüngungsprofil des α-Abschnitts entlang einer parabelförmigen Kurve variiert.

11. Flexible endodontische Feile (12, 14, 16, 18, 19) nach einem der Ansprüche 1 bis 10, wobei die genannte Pilotspitze (20) eine Länge von 0,25 mm bis 1,0 mm und einen Durchmesser von 0,01 mm bis 1,1 mm hat, so dass eine Pilotspitze (20) von 0,01 mm Durchmesser eine Länge von 0,25 mm hat, eine Pilotspitze (20) von 1,0 mm Länge einen Durchmesser von 1,1 mm hat und eine Pilotspitze (20) einer Länge zwischen 0,25 mm und 1,0 mm einen Durchmesser zwischen 0,01 mm und 1,1 mm hat.

12. Flexible endodontische Feile (12, 14, 16, 18, 19) nach einem der vorhergehenden Ansprüche, wobei die Pilotspitze (20) mit einem nichtschneidenden Kehlenraum (25) ausgebildet ist, um die Materialentfernung zu ermöglichen.

13. Flexible endodontische Feile (12, 14, 16, 18, 19) nach einem der vorhergehenden Ansprüche, die einen an dem Schaft befestigten Griff zur Erleichterung der Handhabung der Feile hat.

14. Flexible endodontische Feile (12, 14, 16, 18, 19) nach einem der vorhergehenden Ansprüche, wobei der Schaft mit einem Latch-Grip-Rastteil zur Kopplung an ein dentales Handstück versehen ist.

15. Satz flexibler endodontischer Feilen (12, 14, 16, 18, 19), wobei die Feilen jeweils einer endodontischen Feile nach einem der vorhergehenden Ansprüche entsprechen, wobei die Verjüngung des ersten Teils α des Kehlenteils in dem genannten Satz von Feile zu Feile variiert.

16. Satz flexibler endodontischer Feilen (12, 14, 16, 18, 19) nach Anspruch 15, wobei der Variationsbereich der Verjüngung des ersten Teils α des Kehlenteils von Feile zu Feile von 0,06 mm/mm bis 0,12 mm/mm ist.

17. Satz flexibler endodontischer Feilen (12, 14, 16, 18, 19) nach Anspruch 15 oder 16, wobei eine Länge des ersten Teils α des Kehlenteils in dem genannten Satz von Feile zu Feile umgekehrt proportional zur Verjüngung im ersten Teil α des Kehlenteils variiert.

18. Satz flexibler endodontischer Feilen (12, 14, 16, 18, 19) nach einem der Ansprüche 15 bis 17, wobei die Verjüngung des zweiten Teils β des Kehlenteils von Feile zu Feile umgekehrt proportional zur Variation des Verjüngungsgrads im ersten Teil α des Kehlenteils der Feilen im genannten Satz variiert.

19. Satz flexibler endodontischer Feilen (12, 14, 16, 18, 19) nach Anspruch 18, wobei die Verjüngung des zweiten Teils des genannten Kehlenteils von 0,01 auf 0,04 mm/mm zunimmt, während die Verjüngung des ersten Teils des genannten Kehlenteils von 0,12 auf 0,06 mm/mm abnimmt.

20. Satz flexibler endodontischer Feilen (12, 14, 16, 18, 19) nach Anspruch 18 oder 19, wobei der Teil der Länge des sich verjüngenden Kehlenteils, der aus dem ersten α Teil des Kehlenteils besteht, von Feile zu Feile in dem genannten Satz umgekehrt proportional zur Variation der Verjüngung des ersten Teils α des Kehlenteils variiert.

21. Satz flexibler endodontischer Feilen (12, 14, 16, 18, 19), umfassend bis zu acht Feilen, nach einem der Ansprüche 15 bis 20, wobei:
die Pilotspitze (20) jeder Feile in dem Satz 1 mm lang ist,
der Durchmesser eines zylindrischen Teils der Pilotspitze (20) 1 mm von der Spitze (D1) in jeder Feile in dem Satz nach und nach größer ist, wobei der Durchmesser von 0,1 bis 1,3 mm reicht und 0,3 mm kleiner als der Durchmesser des zylindrischen Teils 4 mm von der Spitze (D4) ist,
jede Feile in dem Satz einen sich verjüngenden Alpha-Teil proximal der Pilotspitze hat, der sich vom Ort des Durchmessers D1 3 mm weit erstreckt, wobei er eine Schrägung von 0,1 mm/mm hat,
die Pilotspitze (20) zwischen ihrer Spitze und dem Alpha-Teil voll gerundet ist,
jede Feile in dem Satz einen sich verjüngenden Beta-Teil hat, der vom Alpha-Teil zu einem Schaft der Feile verläuft, wobei der Beta-Teil eine Länge von 12 mm und eine Schrägung von 0,05 mm/mm hat, so dass der Schaft einen Durchmesser an D16 von 1,05 mm bis 2,25 mm hat, und
jede Feile in dem Satz eine Schaftlänge von 12 mm hat.

22. Satz flexibler endodontischer Feilen (12, 14, 16, 18, 19) nach einem der Ansprüche 15 bis 21, wobei die Länge der Pilotspitze (20) von einer Feile zur anderen variiert, wobei die Länge der Pilotspitze (20) für eine Feile, die eine Pilotspitze (20) mit einem relativ kürzeren Durchmesser der Pilotspitze (20) hat, kürzer als 1 mm ist, und für eine Feile mit einem relativ größeren Pilotspitzendurchmesser länger als 1 mm ist.

## Revendications

1. Lime endodontique souple (12, 14, 16, 18, 19) comprenant :
un corps arrondi ayant un premier diamétre ;
une pointe à l'extrémité de la lime distante du corps, ladite pointe ayant un second diamètre qui est inférieur audit premier diamètre ; et
une partie de cannelures conique s'étendant entre ladite pointe et ledit corps et ayant au moins une partie de coupe spiralée sur sa longueur ;
dans laquelle ladite partie de cannelures conique a des premier et second degrés de conicité différents dans des première α et seconde β parties différentes de ladite partie de cannelures ;
**caractérisée en ce que** :
le changement de conicité entre lesdits premier et second degrés de conicité différents est graduel et continu depuis la première α jusqu'à la seconde β partie de ladite partie de cannelures ; et **en ce que**
une pointe pilote (20) s'étend depuis la pointe pour fournir une surface lisse au niveau de l'extrémité avant de la lime afin de guider la lime le long du canal radiculaire (30) de la dent et d'éviter un transport quand la lime approche d'une extrémité apicale du canal radiculaire.

2. Lime endodontique souple (12, 14, 16, 18, 19) selon la revendication 1, dans laquelle le diamètre de la pointe pilote (2) est inférieur à une partie α adjacente de la partie de cannelures de la lime de manière à limiter la pénétration de la partie α de la partie de cannelures de la lime dans le canal radiculaire (30).

3. Lime endodontique souple (12, 14, 16, 18, 19) selon la revendication 1 ou 2, dans laquelle la première partie α de la partie de cannelures est courbe depuis le point d'intersection avec la pointe pilote (20) vers la seconde partie β de la partie de cannelures de manière à fournir une partie continûment courbe (24) proximalement à la pointe pilote (20).

4. Lime endodontique souple (12, 14, 16, 18, 19) selon l'une quelconque des revendications 1 à 3, dans lequel la pointe pilote (20) comporte une partie cylindrique ayant un diamètre uniforme sur sa longueur.

5. Lime endodontique souple (12, 14, 16, 18, 19) selon l'une quelconque des revendications précédentes, dans laquelle l'extrémité de la pointe pilote (20) distante du corps de la lime est hémisphérique.

6. Lime endodontique souple (12, 14, 16, 18, 19) selon l'une quelconque des revendications précédentes, dans laquelle la première partie α de ladite partie de cannelures, adjacente à la pointe, présente un premier degré fixe de conicité et une seconde partie β de ladite partie de cannelures, adjacente au corps, présente un second degré fixe de conicité qui est inférieur au degré de conicité de la première partie.

7. Lime endodontique souple (12, 14, 16, 18, 19) selon la revendication 6, dans laquelle les conicités des première α et seconde β parties de la partie de cannelures ont un rapport sélectionné l'une par rapport à l'autre.

8. Lime endodontique souple (12, 14, 16, 18, 19) selon la revendication 7, dans laquelle ledit rapport est compris dans une plage de trois à six.

9. Lime endodontique souple (12, 14, 16, 18, 19) selon l'une quelconque des revendications précédentes, dans laquelle le degré de conicité à la pointe de ladite lime change jusqu'à l'angle de conicité adjacent au corps suivant une courbe parabolique.

10. Lime endodontique souple (12, 14, 16, 18, 19) selon l'une quelconque des revendications précédentes, dans laquelle le profil de conicité de la section α varie selon une courbe parabolique.

11. Lime endodontique souple (12, 14, 16, 18, 19) selon l'une quelconque des revendications 1 à 10, dans laquelle ladite pointe pilote (20) a une longueur de 0,25 mm à 1,0 mm et un diamètre de 0,01 mm à 1,1 mm, de telle sorte qu'une pointe pilote (20) d'un diamètre de 0,01 mm a une longueur de 0,25 mm, une pointe pilote (20) d'une longueur de 1,0 mm a un diamètre de 1,1 mm et une pointe pilote (20) d'une longueur entre 0,25 mm à 1,0 mm a un diamètre entre 0,01 mm et 1,1 mm.

12. Lime endodontique souple (12, 14, 16, 18, 19) selon l'une quelconque des revendications précédentes, dans laquelle la pointe pilote (20) est formée avec un espace de cannelures non coupant (25) pour faciliter le retrait de substance.

13. Lime endodontique souple (12, 14, 16, 18, 19) selon l'une quelconque des revendications précédentes, comportant un manche fixé au corps pour faciliter la manipulation de la lime.

14. Lime endodontique souple (12, 14, 16, 18, 19) selon l'une quelconque des revendications précédentes, dans laquelle le corps est doté d'une poignée bloquante destinée à être couplée à un embout dentaire.

15. Ensemble de limes endodontiques souples (12, 14, 16, 18, 19), chaque lime correspondant à une lime endodontique selon l'une quelconque des revendications précédentes, la conicité de la première partie α de la partie de cannelures variant d'une lime à une autre dans ledit ensemble.

16. Ensemble de limes endodontiques souples (12, 14, 16, 18, 19) selon la revendication 15, dans lequel d'une lime à une autre la plage de variation de la conicité de la première partie α de la partie de cannelures s'étend de 0,06 mm/mm à 0,12 mm/mm.

17. Ensemble de limes endodontiques souples (12, 14, 16, 18, 19) selon la revendication 15 ou 16, dans lequel une longueur de la première partie α de la partie de cannelures varie inversement à la conicité de la première partie α de la partie de cannelures d'une lime à une autre dans ledit ensemble.

18. Ensemble de limes endodontiques souples (12, 14, 16, 18, 19) selon l'une quelconque des revendications 15 à 17, dans lequel la conicité de la seconde partie β de la partie de cannelures varie d'une lime à une autre inversement à la variation du degré de conicité dans la première partie α des parties de cannelures des limes dans ledit ensemble.

19. Ensemble de limes endodontiques souples (12, 14, 16, 18, 19) selon la revendication 18, dans lequel la conicité de la seconde partie de ladite partie de cannelures augmente de 0,01 à 0,04 mm/mm tandis que la conicité de la première partie de ladite partie de cannelures diminue de 0,12 à 0,06 mm/mm.

20. Ensemble de limes endodontiques souples (12, 14, 16, 18, 19) selon la revendication 18 ou 19, dans lequel la proportion de la longueur de la partie de cannelures conique composée de la première partie α varie inversement à la variation de la conicité de la première partie α de la partie de cannelures d'une lime à une autre dans ledit ensemble.

21. Ensemble de limes endodontiques souples (12, 14, 16, 18, 19) comprenant jusqu'à 8 limes selon l'une quelconque des revendications 15 à 20, dans lequel :
la pointe pilote (20) de chaque lime dans l'ensemble a une longueur de 1 mm ;
le diamètre d'une partie cylindrique de la pointe pilote (20) située à 1 mm de la pointe (D1) est progressivement plus grand dans chaque lime dans l'ensemble, allant d'un diamètre de 0,1 à 1,3 mm et est inférieur de 0,3mm au diamètre de la partie cylindrique à 4 mm de la pointe (D4) ;
chaque lime dans l'ensemble a une partie alpha conique proximale à la pointe pilote s'étendant sur 3 mm depuis l'emplacement du diamètre D1 avec une pente de 0,10 mm/mm ;
la pointe pilote (20) est entièrement arrondie entre sa pointe et la partie alpha ;
chaque lime dans l'ensemble a une partie bêta conique s'étendant depuis la partie alpha jusqu'à un corps de la lime, la partie bêta ayant une longueur de 12 mm et une pente de 0,05 mm/mm si bien que le corps a un diamètre D16 de 1,05 mm à 2,25 mm ; et
chaque lime dans l'ensemble a une longueur de corps de 12 mm.

22. Ensemble de limes endodontiques souples (12, 14, 16, 18, 19) selon l'une quelconque des revendications 15 à 21, dans lequel la pointe pilote (20) varie en longueur d'une lime à une autre, la longueur de la pointe pilote (20) étant de moins de 1 mm pour une lime ayant une pointe pilote (20) ayant un diamètre de pointe pilote (20) relativement plus court et de plus de 1 mm pour une lime ayant un diamètre de pointe pilote relativement plus grand.
